(19) Europäisches Patentamt / European Patent Office / Office européen des brevets

(11) **EP 3 282 545 B1**

(12) **EUROPEAN PATENT SPECIFICATION**

(45) Date of publication and mention of the grant of the patent:
**08.07.2026 Bulletin 2026/28**

(21) Application number: **16776853.0**

(22) Date of filing: **06.04.2016**

(51) International Patent Classification (IPC):
*H02J 7/02* (2016.01)   *H02J 50/40* (2016.01)
*H02J 50/90* (2016.01)   *H02J 50/80* (2016.01)
*H02J 50/12* (2016.01)

(52) Cooperative Patent Classification (CPC):
**H02J 50/12; H02J 7/42; H02J 50/402; H02J 50/80; H02J 50/90**

(86) International application number:
**PCT/KR2016/003591**

(87) International publication number:
**WO 2016/163750 (13.10.2016 Gazette 2016/41)**

(54) **WIRELESS POWER TRANSMISSION DEVICE AND CONTROL METHOD THEREFOR**

VORRICHTUNG ZUR DRAHTLOSEN ENERGIEÜBERTRAGUNG UND STEUERUNGSVERFAHREN DAFÜR

DISPOSITIF DE TRANSMISSION D'ÉNERGIE SANS FIL ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2015 KR 20150048870**

(43) Date of publication of application:
**14.02.2018 Bulletin 2018/07**

(73) Proprietor: **LG Innotek Co., Ltd.**
**Seoul, 04637 (KR)**

(72) Inventors:
• **PARK, Soo Young**
  **Seoul 04637 (KR)**
• **PARK, Su Bin**
  **Seoul 04637 (KR)**
• **LEE, Jong Heon**
  **Seoul 04637 (KR)**

(74) Representative: **DREISS Patentanwälte PartG mbB**
**Friedrichstraße 6**
**70174 Stuttgart (DE)**

(56) References cited:
EP-A1- 2 256 895       WO-A1-2014/155519
KR-A- 20110 137 393    KR-A- 20120 100 217
KR-A- 20130 106 707    KR-A- 20140 101 847
US-A1- 2006 202 665    US-A1- 2009 224 723
US-A1- 2010 259 217    US-A1- 2014 312 702
US-A1- 2015 054 347

## Description

[Technical Field]

The present invention relates to a wireless power transmission device and a control method therefor, and more particularly, to a wireless power transmission device having a plurality of charging transmission units and a control method therefor.

[Background Art]

Features related to the subject-matter of the claims are known from US 2015/054347 A1, US 2010/259217 A1, US 2006/202665 A1, EP 2 256 895 A1, US 2014/312702 A1, and US 2009/224723 A1. Recently, as information and communication technology rapidly develops, a ubiquitous society based on information and communication technology is being formed.

In order for information communication devices to be connected anywhere and anytime, sensors equipped with a computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort for users. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field. Back in the 1800s, an electric motor or a transformer based on the electromagnetic induction principle began to be used. Thereafter, a method of transmitting electric energy by radiating an electromagnetic wave such as a radio wave or laser was tried. The principle of electromagnetic induction also forms the basis of charging electric toothbrushes we often use and some wireless shavers.

Up to now, wireless energy transmission schemes may be broadly classified into electromagnetic induction, electromagnetic resonance, and power transmission using a short-wavelength radio frequency.

In the electromagnetic induction scheme, when two coils are arranged adjacent to each other and a current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is 1 cm or less. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic waves. However, this scheme may be used only at a limited distance and in a limited space, and has somewhat low energy transfer efficiency.

The short-wavelength wireless power transmission scheme (simply, RF scheme) takes advantage of the fact that energy can be transmitted and received directly in the form of radio waves. This technology is an RF power transmission scheme using a rectenna. A rectenna, which is a compound of "antenna" and "rectifier", refers to a device that converts RF power directly into direct current (DC) power. That is, the RF method is a technology for converting AC radio waves into DC waves. Recently, with improvement in efficiency, commercialization of RF technology has been actively researched. Wireless power transmission technology can be applied not only to the mobile industry, but also to various industries such as IT, railroad, and home appliance industries.

In the related art, a wireless power transmission device including a plurality of coils has been disclosed to transmit power to a wireless power reception device. However, there is a need for a technique for enabling a wireless power transmission device to more efficiently transmit power to a wireless power reception device.

[Disclosure]

[Technical Problem]

Embodiments provide a wireless power transmission device including a plurality of power transmission units.

Embodiments further provide a wireless power transmission device for accurately recognizing a wireless power reception device and performing wireless charging.

Embodiments further provide a wireless power transmission device for searching for a wireless power reception device more efficiently.

Embodiments further provide a wireless power transmission device for determining the shape of a wireless power reception device and charging the reception device with a necessary part based on the determination.

The technical objects that can be achieved through the embodiments are not limited to what has been particularly described hereinabove and other technical objects not described herein will be more clearly understood by persons skilled in the art from the following detailed description.

[Technical Solution]

The present invention is defined by the independent claims 1 and 8. Preferred embodiments of the invention are set out in the dependent claims.

The above-described aspects of the present disclosure are merely a part of preferred embodiments of the present disclosure. Those skilled in the art will derive and understand various embodiments reflecting the technical features of the present disclosure from the following detailed description of the present disclosure.

[Advantageous Effects]

Embodiments provide a wireless power transmission device including a plurality of power transmission units.

In addition, a wireless power reception device may be accurately recognized and thus device efficiency may be improved.

Further, as wireless power is transmitted and received with a necessary portion in consideration of the shape of the wireless power reception device, device efficiency and user convenience may be improved.

It will be appreciated by those skilled in the art that that the effects that can be achieved through the embodiments of the present disclosure are not limited to those described above and other advantages of the present disclosure will be more clearly understood from the following detailed description.

[Description of Drawings]

The accompanying drawings, which are included to provide a further understanding of the invention and are incorporated in and constitute a part of this application, illustrate embodiments of the disclosure and together with the description serve to explain the principle of the disclosure.

FIG. 1 illustrates a wireless power transmission system according to an embodiment.
FIG. 2 is an equivalent circuit diagram of a transmission induction coil according to an embodiment.
FIG. 3 is an equivalent circuit diagram of a power source and a wireless power transmission device according to an embodiment.
FIG. 4 is an equivalent circuit diagram of a wireless power reception device according to an embodiment.
FIG. 5 is a perspective view illustrating a wireless power transmission system having a plurality of power transmission units according to an embodiment of the present disclosure.
FIG. 6 is a perspective view illustrating a rear surface of a terminal, which is an example of a wireless power reception device.
FIG. 7 is a cross-sectional view illustrating a wireless power transmission system according to an embodiment.
FIG. 8 illustrates a control method for a wireless power transmission device according to an embodiment.

FIG. 9 illustrates a wireless power transmission device for recognizing a wireless power reception device according to an embodiment.
FIG. 10 illustrates a method of specifying a power transmission group of a wireless transmission device according to an embodiment.
FIGs. 11 and 12 illustrate a wireless power transmission device for controlling the phase of a power transmission group in order to prevent magnetic interference according to an embodiment.
FIGs. 13 and 14 illustrate a method of controlling power according to an embodiment.
FIG. 15 is a block diagram of a wireless power transmission system according to an embodiment.
FIG. 16 is a detailed block diagram of the wireless power transmission system of FIG. 15.

[Best Mode]

According to an embodiment of the present disclosure, a method of controlling a wireless power transmission device equipped with a charging pad includes: recognizing a wireless power reception device through a plurality of power transmission units included in the charging pad; scanning a shape of the reception device and specifying a power transmission group including at least one power transmission unit to transmit power to the reception device; selecting a first power transmission unit having superior coil alignment with the reception unit in the power transmission group; controlling a phase of the power transmission group with respect to the reception device based on the first power transmission unit; and determining a reception power limit of the reception device and adjusting power of the power transmission group to be transmitted to the reception device.

[Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

In the description of the embodiments, it is to be understood that when an element is described as being "on" or "under" another element, it can be "directly" on or under another element or can be "indirectly" formed such that one or more other intervening elements are also present between the two elements. In addition, when an element is described as being "on" or "under," the term "on" or "under" may refer to not only the upper side but also the lower side with respect to the element.

In the description of the embodiments, "transmitter," "transmission terminal," "transmission device," "transmission side," "power transmission device," and the like can be used interchangeably to refer to a wireless power transmission device, for simplicity. In addition, "receiver," "reception terminal," "reception side," "reception device," "power reception device," and the like can be used interchangeably to refer to a wireless power reception device, for simplicity.

A wireless power transmission device according to an embodiment of the present disclosure may include a plurality of wireless power transmission means to wirelessly transmit power to a plurality of receivers.

A wireless power transmission device according to an embodiment of the present disclosure may be applied to a mobile phone, a smartphone, a laptop computer, a digital broadcast terminal, a PDA (Personal Digital Assistant), a PMP (Portable Multimedia Player), a navigation system, an MP3 player, and other small electronic devices. However, embodiments are not limited thereto.

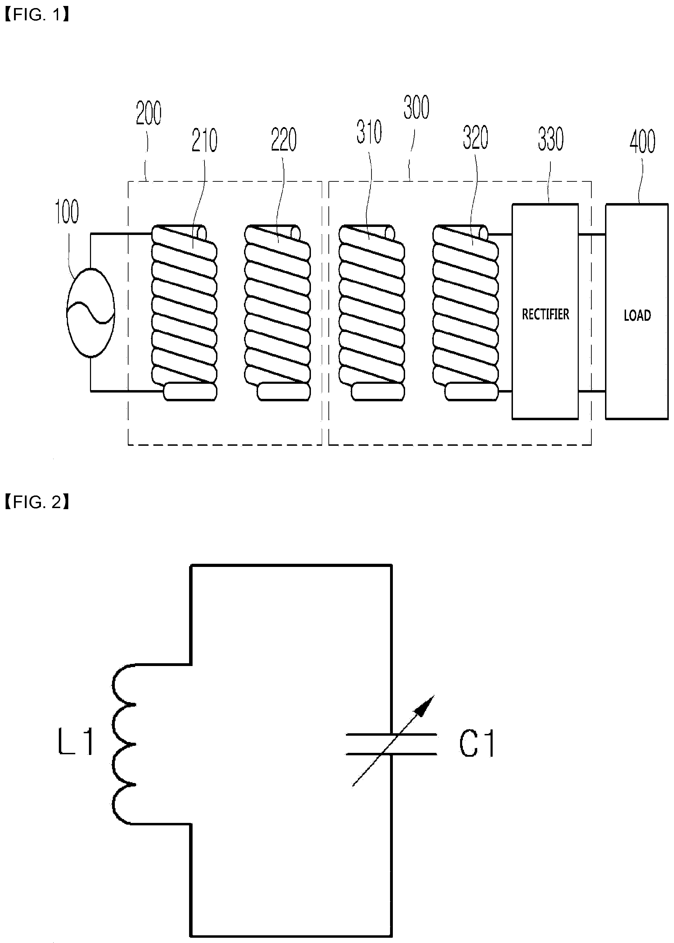

FIG. 1 illustrates an example of a wireless power transmission system.

Referring to FIG. 1, the wireless power transmission system may include a power source 100, a wireless power transmission device 200, a wireless power reception device 300, and a load 400.

The power source 100 may be included in the wireless power transmission device 200, but embodiments are not limited thereto.

The wireless power transmission device 200 may include a transmission induction coil 210 and a transmission resonance coil 220.

The wireless power reception device 300 may include a reception resonance coil 310, a reception induction coil 320, and a rectifier 330.

Both ends of the power source 100 may be connected to both ends of the transmission induction coil 210.

The transmission resonance coil 220 may be disposed at a certain distance from the transmission induction coil 210.

The reception resonance coil 310 may be disposed at a certain distance from the reception induction coil 320.

Both ends of the reception induction coil 320 may be connected to both ends of the rectifier 330, and the load 400 may be connected to both ends of the rectifier 330. In an embodiment, the load 400 may be included in the wireless power reception device 300.

The power generated by the power source 100 may be transmitted to the wireless power transmission device 200, and the power transmitted to the wireless power transmission device 200 may be transmitted to the wireless power reception device 300 which is resonant with the wireless power transmission device 200 by a resonance effect, i.e., has the same resonant frequency as the wireless power transmission device 200.

Hereinafter, a power transmission process will be described in more detail.

The power source 100 may generate alternating current (AC) power having a predetermined frequency and transfer the generated power to the wireless power transmission device 200.

The transmission induction coil 210 and the transmission resonance coil 220 may be inductively coupled. That is, an AC current may be generated in the transmission induction coil 210 by the AC power supplied from the power source 100, and an AC current may also be induced in the transmission resonance coil 220 separated from the transmission induction coil 210 by electromagnetic induction.

Thereafter, the power transmitted to the transmission resonance coil 220 may be transmitted to the wireless power reception device 300 having the same resonance frequency by resonance using frequency resonance with the wireless power transmission device 200.

Power may be transmitted, by resonance, between two LC circuits whose impedances are matched. Such power transmission by resonance enables power transmission with higher transmission efficiency over a longer distance than power transmission by electromagnetic induction.

The reception resonance coil 310 may receive the power transmitted from the transmission resonance coil 220 using frequency resonance. An AC current may flow in the reception resonance coil 310 due to the received power and the power transmitted to the reception resonance coil 310 may be transmitted to the reception induction coil 320, inductively coupled to the reception resonance coil 310, by electromagnetic induction. The power transmitted to the reception induction coil 320 may be rectified through the rectifier 330 and transmitted to the load 400.

In an embodiment, the transmission induction coil 210, the transmission resonance coil 220, the reception resonance coil 310, and the reception induction coil 320 may have one of a spiral structure and a helical structure. However, embodiments are not limited thereto.

The transmitting resonance coil 220 and the reception resonance coil 310 may be resonantly coupled so as to transmit power at a resonance frequency.

Power transmission efficiency between the wireless power transmission device 200 and the wireless power reception device 300 may be greatly improved due to resonance coupling between the transmission resonance coil 220 and the reception resonance coil 310.

The above-described wireless power transmission system transmits power using the resonance frequency scheme.

While the wireless power transmission device 200 is illustrated in the embodiment as having one transmission induction coil 210 and one transmission resonance coil 220, embodiments are not limited thereto. The wireless power transmission device 200 may include a plurality of transmission induction coils 210 and a plurality of transmission resonance coils 220. A detailed example will be described later.

In another embodiment, the transmission induction coil 210 of the wireless power transmission device 200 and/or the reception induction coil 320 of the wireless power reception device 300 may be omitted.

Embodiments of the present disclosure may be applied not only to power transmission using the resonance frequency scheme, but also to power transmission using the electromagnetic induction scheme.

That is, in an embodiment, if the wireless power transmission system performs power transmission based on electromagnetic induction, the transmission resonance coil 220 included in the wireless power transmission device 200 and the reception resonance coil 310 included in the wireless power reception device 300 may be omitted.

In wireless power transmission, quality factor and coupling coefficient may have important meanings. That is, power transmission efficiency may be proportional to each of the quality factor and the coupling coefficient. Therefore, as the value of at least one of the quality factor and the coupling coefficient increases, power transmission efficiency may be improved.

The quality factor may mean an index of energy that may be accumulated in the vicinity of the wireless power transmission device 200 or the wireless power reception device 300.

The quality factor may vary depending on the operating frequency (w), shape, dimensions, material, etc. of a coil. The quality factor may be given by Equation 1 below.

$$\text{Equation 1}$$

$$Q=w*L/R$$

Here, L denotes inductance of the coil, and R denotes resistance corresponding to the amount of power loss occurring in the coil itself.

The quality factor may have a value from 0 to infinity. The quality factor is proportional to the power transmission efficiency between the wireless power transmission device 200 and the wireless power reception device 300.

The coupling coefficient means the degree of magnetic coupling between the transmission side coil and the reception side coil, and ranges from 0 to 1.

The coupling coefficient may vary depending on the relative positions or distance between the transmission side coil and the reception side coil.

FIG. 2 is an equivalent circuit diagram of a transmission induction coil.

As shown in FIG. 2, the transmission induction coil 210 may include an inductor L1 and a capacitor C1, and a circuit having a proper inductance and capacitance may be configured by the inductor L1 and the capacitor C1.

The transmission induction coil 210 may include an equivalent circuit in which both ends of the inductor L1 are connected to both ends of the capacitor C1. That is, the transmission induction coil 210 may include an equivalent circuit in which the inductor L1 and the capacitor C1 are connected in parallel.

The capacitor C1 may be a variable capacitor, and impedance matching may be performed as the capacitance of the capacitor C1 is adjusted. The equivalent circuits of the transmission resonance coil 220, the reception resonance coil 310, and the reception induction coil 320 may be the same as or similar to the circuit shown in FIG. 2, but embodiments are not limited thereto.

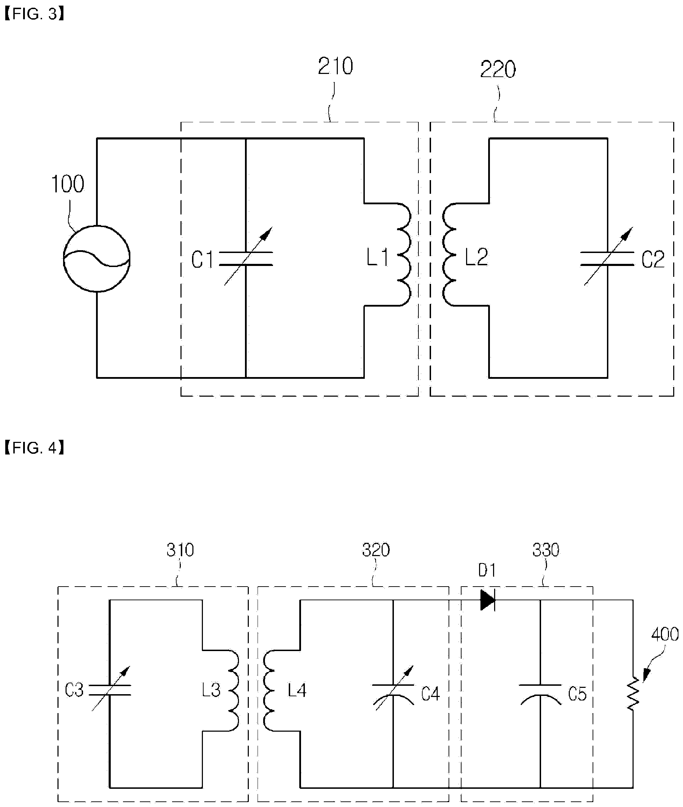

FIG. 3 is an equivalent circuit diagram of a power source and a wireless power transmission device according to an embodiment.

As shown in FIG. 3, the transmission induction coil 210 and the transmission resonance coil 220 may respectively include an inductor L1 or L2 and a capacitor C1 or C2 that have predetermined inductance and capacitance.

FIG. 4 is an equivalent circuit diagram of a wireless power reception device according to an embodiment.

As shown in FIG. 4, the reception resonance coil 310 and the reception induction coil 320 may respectively include an inductor L3 or L4 and a capacitor C3 or C4 that have predetermined inductance and capacitance.

The rectifier 330 may convert the AC power received from the reception induction coil 320 into direct current (DC) power and transmit the converted DC power to the load 400.

Specifically, the rectifier 330 may include a rectifier and a smoothing circuit, which are not shown. In an embodiment, the rectifier may be a silicon rectifier, and may be equivalent to a diode D1, as shown in FIG. 4, but is not limited thereto.

The rectifier may convert the AC power received from the reception induction coil 320 into DC power.

The smoothing circuit may output smooth DC power by removing an AC component included in the DC power converted by the rectifier. In an embodiment, the smoothing circuit may be, without being limited to, a rectifying capacitor C5 as shown in FIG. 4.

The DC power transmitted from the rectifier 330 may be a DC voltage or a DC current, but is not limited thereto.

The load 400 may be any rechargeable battery or device requiring DC power. For example, the load 400 may be a battery.

The wireless power reception device 300 may be installed in an electronic device requiring power such as a mobile phone, a notebook computer, and a mouse. Accordingly, the reception resonance coil 310 and the reception induction coil 320 may have shapes conforming to the shape of the electronic device.

The wireless power transmission device 200 may exchange information with the wireless power reception device 300 using in-band or out-of-band communication.

In-band communication may refer to communication through which information is exchanged between the wireless power transmission device 200 and the wireless power reception device 300 using a signal having a frequency used for wireless power transmission. To this end, the wireless power reception device 300 may further include a switch and may or may not receive power transmitted from the wireless power transmission device 200 through the switching operation of the switch. Accordingly, the wireless power transmission device 200 may detect the amount of power consumed by the wireless power transmission device 200 and recognize the ON or OFF signal of the switch included in the wireless power reception device 300.

Specifically, the wireless power reception device 300 may change the amount of power to be consumed by the wireless power transmission device 200 by changing the amount of power absorbed by a resistor using the resistor and the switch. The wireless power transmission device 200 may sense change in the consumed power and acquire the state information on the load 400. The switch and the resistor may be connected in series. In an embodiment, the state information on the load 400 may include information on the current charging level and the charging level variation of the load 400. The load 400 may be included in the wireless power reception device 300.

More specifically, when the switch is opened, the power absorbed by the resistor becomes 0, and the power consumed by the wireless power transmission device 200 decreases.

When the switch is closed, the power absorbed by the resistor becomes larger than 0, and the power consumed by the wireless power transmission device 200 increases. When the wireless power reception device 200 repeats this operation, the wireless power transmission device 200 may detect the power consumed by the wireless power transmission device 200 and perform digital communication with the wireless power reception device 300.

The wireless power transmission device 200 may receive the state information on the load 400 according to the operation described above and transmit power proper therefor.

Alternatively, it is possible to provide a resistor and a switch to the wireless power transmission device 200 to transmit the state information on the wireless power transmission device 200 to the wireless power reception device 300. In an embodiment, the state information on the wireless power transmission device 200 may include information on the maximum amount of power that the wireless power transmission device 200 is capable of transmitting, the number of the wireless power reception devices 300 to which the wireless power transmission device 200 is providing power, and the amount of available power of the wireless power transmission device 200.

Next, out-of-band communication will be described below.

Out-of-band communication refers to communication in which information necessary for power transmission is exchanged using a separate frequency band other than the resonance frequency band. An out-of-band communication module may be installed in each of the wireless power transmission device 200 and the wireless power reception device 300 and thus information necessary for power transmission may be exchanged between the devices. The out-of-band communication module may be installed in the power source 100, but embodiments are not limited thereto. In an embodiment, the out-of-band communication module may use a short-range communication scheme such as Bluetooth, Bluetooth Low Energy (BLE), Zigbee, Wireless LAN, or Near Field Communication (NFC), but embodiments are not limited thereto.

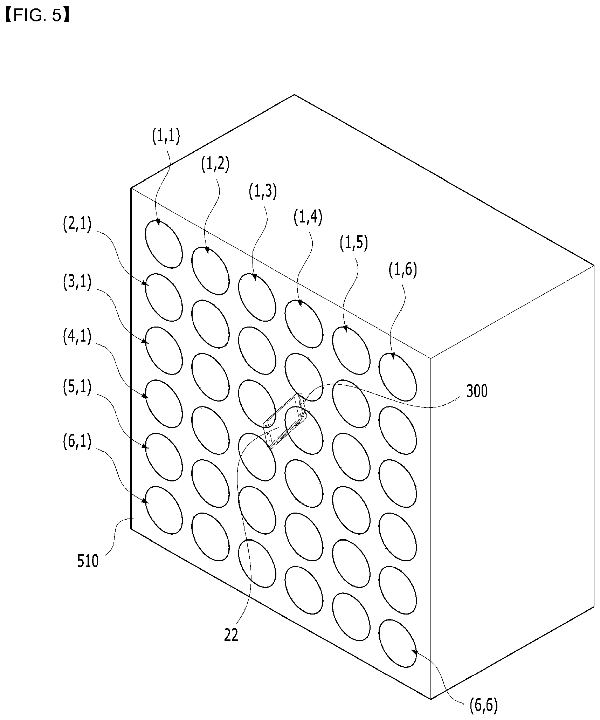

FIG. 5 is a perspective view illustrating a wireless power transmission system having a plurality of power transmission units according to another embodiment of the present disclosure.

Referring to FIG. 5, a wireless power transmission device 200 may include a charging pad 510. Here, the charging pad 510 may include a plurality of power transmission units (1, 1), (1, 2) ,..., (6, 6).

The charging pad 510 may include the power source and the wireless power transmission unit (e.g., a transmission device) shown in FIG. 1. That is, a power source and a plurality of wireless power transmission units (e.g., transmission devices) may be embedded in the charging pad 510. When seen from the above, the charging pad 510 may have a circular, oval, square, or rectangular shape, but embodiments are not limited thereto.

The upper surface of the charging pad 510 may be in surface contact with one surface of the wireless power reception device 300. The shape of at least a part of the upper surface of the charging pad 510 may be the same as the shape of the back surface of the wireless power reception device 300, but embodiments are not limited thereto.

Hereinafter, the wireless power reception device 300 will be described, taking a terminal 300 as an example.

Each of the wireless power transmission units (1, 1), (1, 2) ,..., and (6, 6) embedded in the charging pad 510 may include the transmission coil 210, 220 shown in FIG. 1. Each of the wireless power transmission units (1, 1), (1, 2) ,..., (6, 6) may include a plurality of transmission coils (not shown), but embodiments are not limited thereto.

A transmission coil (not shown) provided to each of the wireless power transmission units (1, 1), (1, 2) ,..., and (6, 6) may be disposed to face the upper surface of the charging pad 510. The transmission coil (not shown) may be disposed in parallel with the upper surface of the charging pad 510 such that the power of the transmission coil (not shown) is uniformly transmitted to the terminal 300.

Each of the plurality of power transmission units (1, 1), (1, 2) ,..., and (6, 6) may receive power from the power source 100 described above. Particularly, a plurality of power sources 100 may be provided so as to match each of the power transmission units (1, 1), (1, 2) ,..., and (6, 6).

The wireless power transmission device 200 may simultaneously transmit wireless power to a plurality of devices such as the illustrated wireless power reception device 300.

The wireless power reception device 300 may include the equivalent circuit shown in FIG. 4. The wireless power reception device 300 may include various types of devices. The wireless power reception device 300 may be applied to a mobile phone, a smartphone, a laptop computer, a digital broadcast terminal, a PDA (Personal Digital Assistant), a PMP (Portable Multimedia Player), a navigation system, an MP3 player, and other small electronic devices, but is not limited thereto.

The terminal 300 may include a battery (not shown) for charging and may refer to any electronic devices capable of performing a predetermined electronic function using power stored in the battery (not shown). For example, the terminal 300 may include a mobile device such as a smartphone or a tablet, or a home appliance such as a television, a refrigerator, or a washing machine.

The terminal 300 may include the wireless power reception device and the load shown in FIG. 1. That is, the wireless power reception device and the load may be embedded in the terminal 300.

The terminal 300 may be placed on the upper surface of the charging pad 510 for charging. When the terminal 300 is placed, the front cover 22 of the terminal 300 may face upward and the rear cover 24 of the terminal 300 may contact the upper surface of the charging pad 510. Thus, power may be wirelessly supplied from the charging pad 510 and the load may be charged with the power.

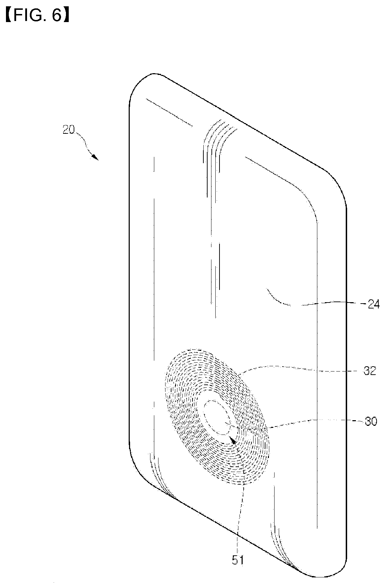

FIG. 6 is a perspective view illustrating a rear surface of a terminal, which is an example of wireless power reception devices. Hereinafter, the wireless power reception device 300 will be described, taking the terminal 300 as an example as shown in FIG. 6.

A reception coil 32 and/or a magnet 30 may be disposed adjacent to the back surface of the terminal 300. The reception coil 32 may also be disposed to face at least one transmission coil disposed in the charging pad 510, the upper surface of the charging pad 510, and the rear cover 24 of the wireless terminal 300. Particularly, positioning the reception coil 32 of the terminal 300 so as to be parallel to at least one transmission coil disposed in the charging pad 510 may maximize transmission efficiency of power transmitted from the transmission coil of the charging pad 510 to the reception coil 32 of the terminal 300.

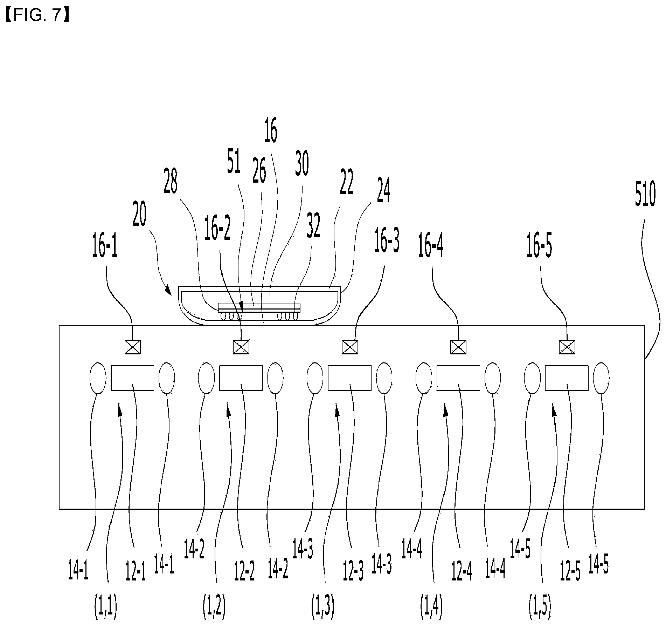

The structure of the wireless power transmission system according to an embodiment will be described in more detail with reference to FIG. 7.

FIG. 7 is a cross-sectional view illustrating a wireless power transmission system according to an embodiment.

FIG. 7 specifically illustrates a part of FIG. 5. The charging pad 510 includes a plurality of power transmission units (1, 1) to (1, 5).

Each of the plurality of power transmission units (1, 1) to (1, 5) may include a transmission coil 14-1 to 14-5 and a plurality of first magnets 12-1 to 12-5. The plurality of transmission coils 14-1 to 14-5 and the plurality of first magnets 12-1 to 12-5 may be disposed adjacent to the upper surface of the charging pad 510. The transmission coils 14-1 to 14-5 and the magnets 12-1 to 12-5 may be disposed in the same plane.

The transmission coils 14-1 to 14-5 may be the transmission induction coil and/or the transmission resonance coil shown in FIG. 1. For example, the transmission resonance coil or the transmission induction coil and the transmission resonance coil are used in the case of the resonance scheme, whereas only the transmission induction coil may be used in the electromagnetic induction scheme.

Each of the plurality of transmission coils 14-1 to 14-5 may be disposed to surround each of the plurality of first magnets 12-1 to 12-5. For example, the first transmission coil 14-1 may surround the first magnet 12-1, the second transmission coil 14-2 may surround the second magnet 12-2, the third transmission coil 14-3 may surround the third magnet 12-3, the fourth transmission coil 14-4 may surround the fourth magnet 12-4, and the fifth transmission coil 14-5 may surround the fifth magnet 12-5. However, since this figure is a sectional view, it is difficult to show this configuration in the figure.

The transmission coils 14-1 to 14-5 may have several turns and adjacent transmission coils 14-1 to 14-5 may be spaced apart from each other. However, embodiments are not limited thereto. The transmission coils 14-1 to 14-5 may be arranged parallel to a virtual horizontal plane. The center regions of the transmission coils 14-1 to 14-5 having this structure may be free spaces.

The plurality of first magnets 12-1 to 12-5 may be disposed in the center regions of the transmission coils 14-1 to 14-5. The thickness of the plurality of first magnets 12-1 to 12-5 may be greater than, equal to, or less than the thickness of the transmission coils 14-1 to 14-5. According to the strength of the magnetic flux density required for the plurality of first magnets 12-1 to 12-5 and the occupied areas of the magnets 12-1 to 12-5, the thickness of the plurality of first magnets 12-1 to 12-5 and the areas of the plurality of first magnets 12-1 to 12-5 may be varied.

The terminal 20 may include a shielding member 26, a reception coil 32, and a second magnet 30. The reception coil 32 and the second magnet 30 may be disposed in the same plane.

While the terminal 20 is illustrated as being in contact with the charging pad 510 of the wireless power transmission device 200, the terminal 20 may be spaced apart from the charging pad 510 by a certain distance.

The terminal 20 may be larger or smaller than each of the plurality of power transmission units (1, 1) to (1, 5), but embodiments are not limited thereto.

The reception coil 32 may be the reception resonance coil and/or the reception induction coil shown in FIG. 1. For example, the reception resonance coil or both the reception resonance coil and the reception induction coil may be used in the resonance scheme, whereas only the reception induction coil may be used in the electromagnetic induction scheme.

The reception coil 32 may be disposed to surround the second magnet 30. The reception coils 32 may have several turns and adjacent reception coils 32 may be spaced apart from each other. The reception coil 32 may be arranged so as to be parallel to a virtual horizontal plane. The center region of the reception coil 32 having such a structure may be a free space.

The second magnet 30 may be disposed in the center region of the reception coil 32. The center region of the reception coil 32 may be smaller than the center region of the transmission coils 14-1 to 14-5, but embodiments are not limited thereto. The thickness of the second magnet 30 may be greater than, equal to, or less than the thickness of the reception coil 32. The thickness of the second magnet 30 and the area of the second magnet 30 may vary depending on the strength of the magnetic flux density required for the second magnet 30 and the occupied area of the second magnet 30.

The second magnet 30 allows the charging pad 510 to sense proximity or contact of the terminal 20.

To allow this sensing operation, the charging pad 510 may further include Hall sensors 16-1 to 16-5. The Hall sensors 16-1 to 16-5 may be disposed between the upper surface of the charging pad 510 and the first magnets 12-1 to 12-5, but embodiments are not limited thereto. The Hall sensors 16-1 to 16-5 may be disposed closer to the upper surface of the charging pad 510 than the first magnets 12-1 to 12-5. The Hall sensors 16-1 to 16-5 may be disposed in the charging pad 510 between the first magnets 12-1 to 12-5 of the charging pad 510 and the second magnet 30 of the terminal 20. When the terminal 20 is not present, the Hall sensors 16-1 to 16-5 sense only the strength of the magnetic flux density of the first magnets 12-1 to 12-5. However, when the terminal 20 is brought close to the charging pad 510, the Hall sensors 16-1 to 16-5 may sense not only the strength of the magnetic flux density of the first magnets 12-1 to 12-5, but also the strength of the magnetic flux density of the second magnet 30. The charging pad 510 may sense the strength of the magnetic flux density of the first magnets 12-1 to 12-5 and the strength of the magnetic flux density of the second magnet 30 sensed when the terminal 20 is placed on the charging pad 510, based on the strength of the magnetic flux density of the first magnets 12-1 to 12-5 sensed when the terminal 20 is not present. If the amount of change $\alpha$ in the magnetic flux density is greater than or equal to a threshold value, it may be determined that the terminal 20 is placed on the charging pad 510 for charging, and thus charging of the terminal 20 may proceed.

While the Hall sensors 16-1 to 16-5 are described as being disposed between the upper surface of the charging pad 510 and the first magnets 12-1 to 12-5 in the above example, it should be noted that the Hall sensors 16-1 to 16-5 may be disposed on one side of the lower end of the first magnets 12-1 to 12-5 or on one side of the lower end of the transmission coils 14-1 to 14-5 in another embodiment.

To this end, the second magnet 30 may be made of a material which produces the amount of change $\alpha$ in the magnetic flux density that is greater than or equal to a threshold value. For example, the threshold may be 32G. The threshold required in the standard may be 40G.

The second magnet 30 may be an electrical sheet. For example, the electrical steel sheet may contain at least 1% to 5% of silicon (Si), but embodiments are not limited thereto. The silicon content of the second magnet 30 may be varied such that the amount of change $\alpha$ in the magnetic flux density is greater than or equal to the threshold value required by the standard or a client company.

For example, the reception coil 32 and the second magnet 30 may be attached to the back surface of the shielding member 26 using an adhesive 28. A printed circuit board on which electronic components including a power source, an AC power generation unit, and a controller are mounted may be disposed on the shielding member 26.

The shielding member 26 may shield a magnetic field induced by the coils such that the magnetic field does not affect the electronic components, thereby preventing malfunction of the electronic component.

Hereinafter, a method of recognizing and controlling the wireless power reception device by the wireless power transmission device will be described in detail.

In yet another embodiment, the first magnet or the second magnet may be replaced by ferrite.

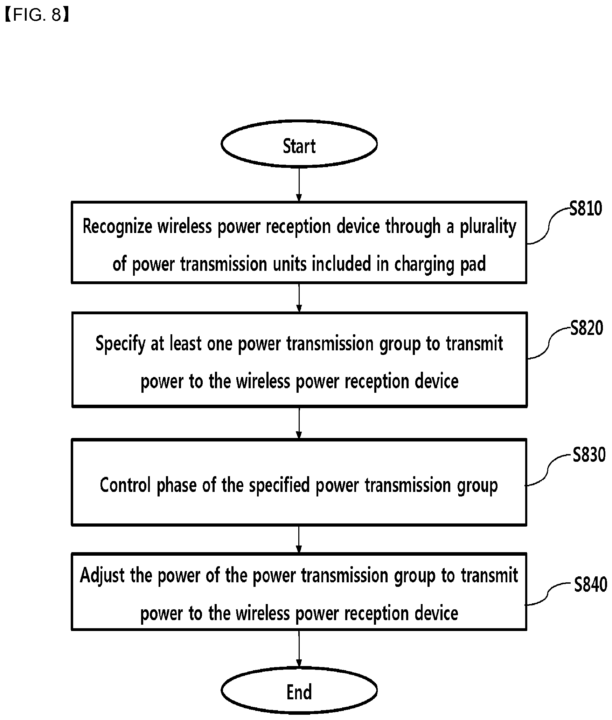

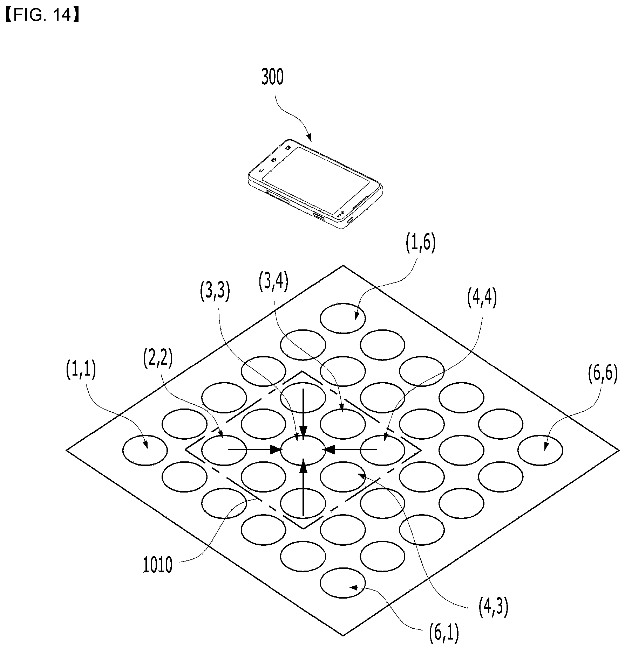

FIG. 8 illustrates a control method for a wireless power transmission device according to an embodiment. Reference numerals from FIG. 5 (e.g., a plurality of power transmission units), FIG. 7 (e.g., a Hall sensor) and FIG. 14 (e.g., a controller), which will be described later, will be further referred to.

First, the controller 17 of the wireless power transmission device 200 recognizes the wireless power reception device 300 through a plurality of power transmission units (1, 1) to (6, 6) (S810).

Each of the plurality of power transmission units (1, 1) to (6, 6) includes a Hall sensor 16-1 to 16-n, and the controller 17 recognizes the wireless power reception device 300 through change in the magnetic fields of the respective Hall sensor 16-1 to 16-n.

Specifically, the Hall sensors 16-1 to 16-n may transmit signals such as a beacon signal to the outside, and the signals are received by the Hall sensors 16-1 to 16-n. In this case, the controller 17 may sense change in the magnetic field of the transmitted radio waves and the received radio waves through the Hall sensors 16-1 to 16-n, and determine whether an object approaches the wireless power transmission device 200.

While the Hall sensors 16-1 to 16-n are described as being included in each of the plurality of power transmission units (1, 1) to (6, 6), they may be disposed in a certain region of the charging pad 510 irrespective of the plurality of power transmission units (1, 1) to (6, 6), this latest configuration is not supported by the appended claims.

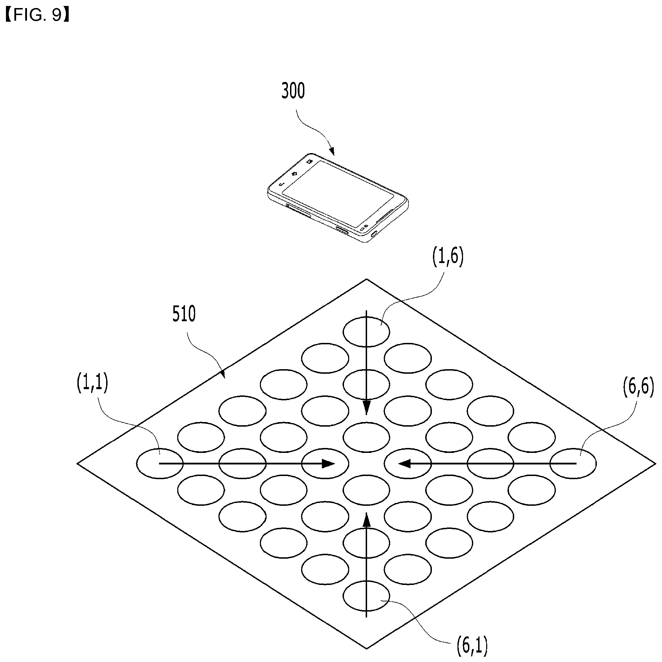

The controller 17 may control the plurality of power transmission units (1, 1) to (6, 6) to drive the Hall sensors 16-1 to 16-n from the outermost periphery to the center, thereby recognizing the wireless power reception device 300. A detailed description will later be given with reference to FIG. 9.

After step S810, the controller 17 specifies a power transmission group including at least one power transmission unit to transmit power to the wireless power reception device 300 (S820).

When change in the magnetic field between each of the at least one power transmission units and the wireless power reception device 300 exceeds a preset threshold value, the controller 17 may specify at least one power transmission unit exceeding the threshold value as a power transmission group 1010.

That is, the controller 17 may specify the power transmission group 1010 capable of transmitting power most efficiently among the plurality of power transmission units (1, 1) to (6, 6).

Meanwhile, the controller 17 scans the shape of the wireless power reception device 300 using a power transmission unit that recognizes the wireless power reception device 300 among the plurality of power transmission units (1, 1) to (6, 6), and specifies at least one power transmission group to transmit power to the wireless power reception device.

The power transmission group 1010 may be a power transmission unit that transmits power to the wireless power reception device 300.

The power transmission group may include a power transmission unit having a Hall sensor having recognized the wireless power reception device 300.

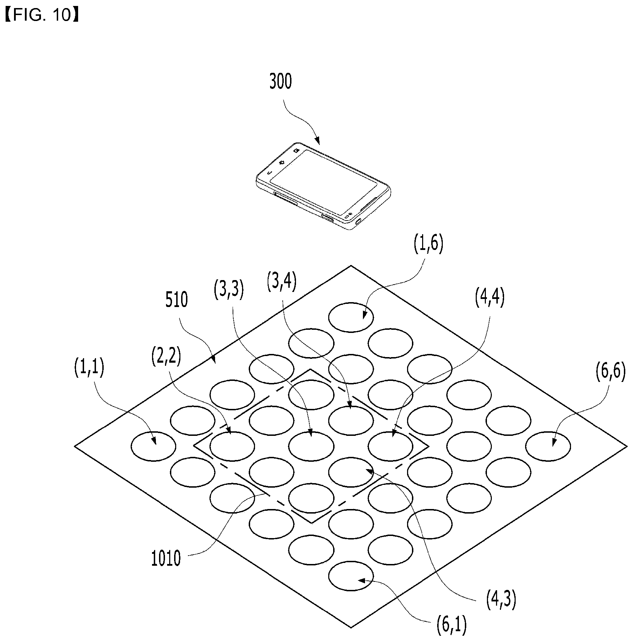

The controller 17 may perform precise scanning of the wireless power reception device 300 through the power transmission unit having recognized the wireless power reception device 300. A specific method will later be described in detail with reference to FIG. 10.

After step S820, the controller 17 controls the phase of the power transmission group with respect the wireless power reception device (S830).

The controller 17 selects a first power transmission unit having superior coil alignment with the reception device 300 in the specified power transmission group. Here, the power transmission unit having excellent alignment refers to a power transmission unit having the largest magnetic field formed with the wireless power reception device, such that charging of the battery provided in the wireless power reception device with power is excellent.

Additionally, the controller 17 controls the phase of the power transmission group with respect to the reception device based on the first power transmission unit. A specific method will be described later.

After step S830, the controller 17 adjusts the power of the power transmission group to be transmitted to the wireless power reception device (S840).

Since the power received by the wireless power reception device 300 is limited, the controller 17 may adjust the power of the power transmission group, considering the distance to the receiver and efficiency.

For example, the controller 17 may supply power to the power transmission unit having the best alignment with the wireless power reception device 300 first, and may then perform power supply to the surrounding power transmission units.

In addition, the controller 17 may cut off the power of a power transmission unit having the poorest alignment with the wireless power reception device 300, and transmit power to the power transmission units from the power transmission units disposed outside the power transmission group to the power transmission unit disposed at the center of the power transmission group. A detailed description will be given later.

FIG. 9 illustrates a wireless power transmission device for recognizing a wireless power reception device according to an embodiment.

Referring to FIG. 9, the controller 17 may recognize the wireless power reception device 300 through the wireless power transmission units sequentially from the wireless power transmission units (1, 1), (1, 6), (6, 1), (6, 6) disposed at the outer periphery of the charging pad 510 to the wireless power transmission unit disposed at the center.

The controller 17 may recognize the wireless power reception device 300 in various ways other than the above-described method. For example, the controller 170 may recognize the wireless power reception device 300 through the wireless power transmission units sequentially from the wireless power transmission unit disposed at the center of the charging pad 510 to the wireless power transmission units (1, 1), (1, 6), (6, 1) and (6, 6) disposed at the periphery, but embodiments are not limited thereto.

The controller 17 may automatically recognize the wireless power reception device 300. The controller 17 may recognize proximity of the wireless power reception device 300 through the Hall sensors 16-1 to 16-n, based on change in the magnetic field.

While the Hall sensors 16-1 to 16-n are illustrated as being included in the respective wireless power transmission units (1, 1) to (6, 6), they may be disposed in another region of the charging pad.

FIG. 10 illustrates a method of specifying a power transmission group of a wireless transmission device according to an embodiment.

According to FIG. 10, the controller 17 may specify at least one power transmission unit undergoing change in the preset magnetic field as the power transmission group 1010.

Among the wireless power transmission units (1, 1) to (6, 6) forming a magnetic field with the wireless power reception device 300, the controller 17 may specify a wireless power transmission unit forming a magnetic field whose magnitude exceeds a preset threshold value as the power transmission group 1010.

The wireless power reception device 300 may be a rectangular parallelepiped, a circle, an ellipse, or the like, and accordingly the controller 17 may specify the power transmission group based on the shape of the wireless power reception device 300.

For example, assuming that the power transmission group 1010 is configured in rows and columns, the controller 17 may specify power transmission units from a power transmission unit (2, 2) to a power transmission unit (2, 4). Then, the controller may specify power transmission units from a power transmission unit (3, 2) to a power transmission unit (3, 4). Thereafter, the controller may specify power transmission units from a power transmission unit (4, 2) to a power transmission unit (4, 4).

That is, through change in the magnetic field, the controller 17 may sequentially select at least one power transmission unit included in the power transmission group 1010.

The controller 17 may first find a power transmission unit having the strongest magnetic field, and specify the power transmission group 1010 based on the found power transmission unit. However, embodiments are not limited thereto.

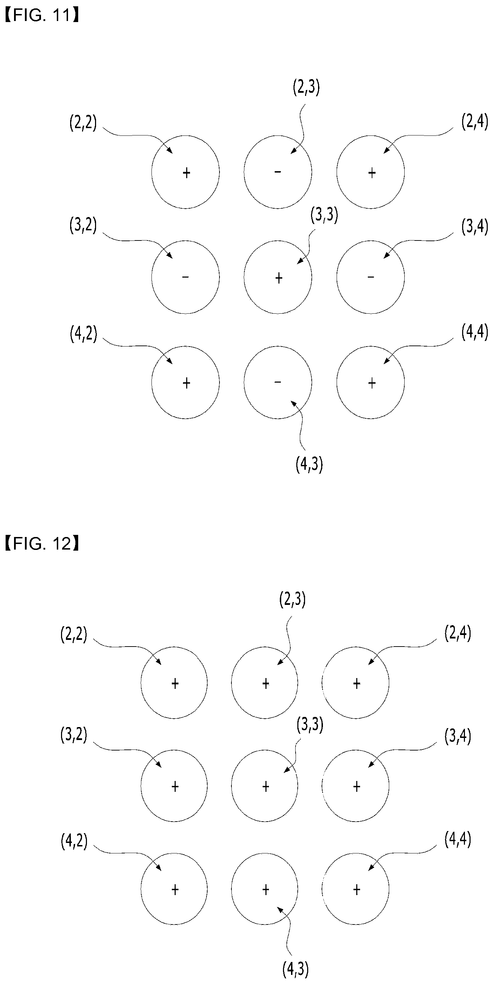

FIGs. 11 and 12 illustrate a wireless power transmission device for controlling the phase of a power transmission group in order to prevent magnetic interference according to an embodiment.

FIG. 11 illustrates a case where phases of a center transmission unit (3, 3) and a neighbor transmission unit are different from each other.

Referring to FIG. 11, the controller 17 may determine the phases of the magnetic fields of all the power transmission units (2, 2) to (4, 4) of the power transmission group 1010.

The controller 17 may adjust the phase of the peripheral power transmission group based on the power transmission unit (3, 3) at the center.

Accordingly, efficient wireless power transmission may be achieved.

After selecting a first power transmission unit (3, 3), the controller 170 may adjust the phases of the immediately adjacent power transmission units (2, 3), (3, 2), (3, 4) and (4, 3) to the same phase as that of the first power transmission unit (3, 3). This is the situation shown in FIG. 12.

For example, when the first power transmission unit (3, 3) has a positive phase (for example, the magnetic field is directed upward), the controller 17 may change the phases of the immediately adjacent power transmission units (2, 3), (3, 2), (3, 4), (4, 3) from a negative phase (for example, the magnetic field is directed downward) to the positive phase.

In this case, the controller 17 may control the phases of the adjacent power transmission units to prevent interference between the power transmission units.

Since the phases of the power transmission units (2, 2), (2, 4), (4, 2) and (4, 4), which are not immediately adjacent to the first power transmission unit (3, 3), are the same as the phase of the first power transmission unit (3, 3), they need not be adjusted by the controller 17.

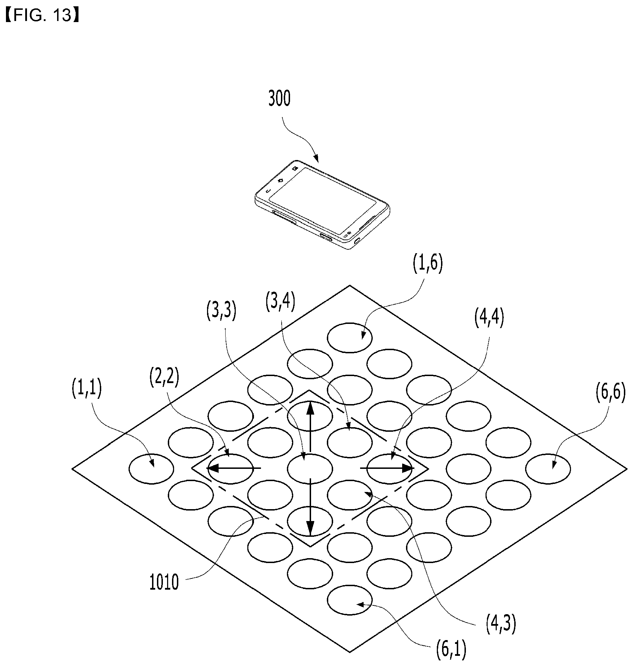

FIGs. 13 and 14 illustrate a method of controlling power according to an embodiment.

According to FIG. 13, the controller 17 may control power based on the first power transmission unit (3, 3). First, it may determine the reception power limit of the reception device, and provide power to the first power transmission unit (3, 3) and then to the power transmission units therearound.

If the first power transmission unit (3, 3) can provide all the required power capacity of the wireless power reception device 300, the controller 17 may control only the first power transmission unit (3, 3) to provide power.

Alternatively, the controller 17 may cause the power to be provided by the first power transmission unit (3, 3) and the surrounding power transmission units in a distributed manner, thereby increasing the service life of the power transmission units.

For example, when the power for wireless power transmission to the first power transmission unit (3, 3) is turned on, and the power of the first power transmission unit (3, 3) is not sufficient to charge the reception device 300, power transmission units adjacent to the first transmission unit (3, 3) in the power transmission group 1010 may be powered on.

Here, the controller 17 turn off the transmission units (1, 1) to (1, 6), (2, 1), (2, 5), (2, 6), (3, 1), (3, 5), (3, 6), (4, 1), (4, 5), (4, 6), (5, 1) to (5, 6), and (6, 1) to (6, 6). In this case, device efficiency may be improved by turning off the power of the power transmission units whose efficiency is low.

The controller 17 may drive the power transmission group 1010 or a non-power transmission group (region other than group 1010) along with the power control described above.

The controller 17 may determine the required reception power of the reception device 300 and distribute power to each of the power transmission units based on the transmission efficiency of each of the power transmission units included in the power transmission group 1010. In this case, power may be most efficiently provided to the reception device 300.

FIG. 14 illustrates a case where the controller 13 turns on the power from the surrounding power transmission units to the first power transmission unit in the power transmission groups.

Referring to FIG. 14, in contrast to FIG. 13, the controller 13 may turn on the power of the surrounding power transmission units in the power transmission group first and then turn on the power of the first power transmission unit (3, 3).

In addition to the above-described method, the battery of the power reception device 300 may be charged in various ways.

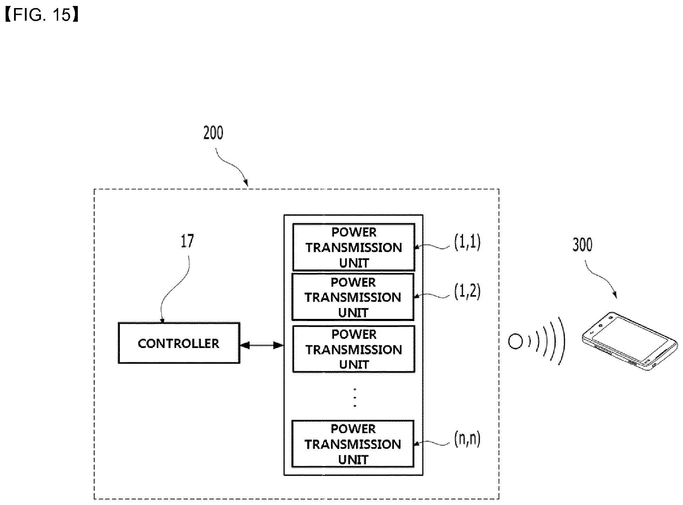

FIG. 15 is a block diagram of a wireless power transmission system according to an embodiment.

Referring to FIG. 15, the wireless power transmission device 200 may include a controller 17 and a plurality of power transmission units (1, 1) to (n, n).

In addition, the wireless power transmission device 200 may transmit power to the wireless power reception device 300.

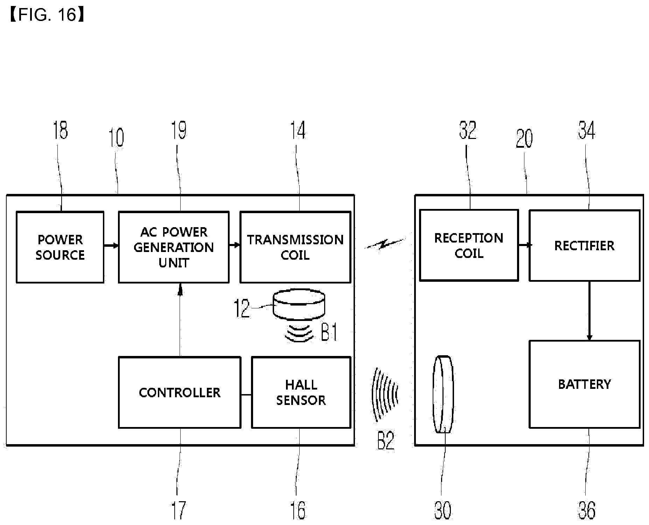

FIG. 16 is a detailed block diagram of the wireless power transmission system of FIG. 15.

Since the outer shape of the charging pad 510 and the terminal 20 have already been described, the circuit configurations in the charging pad 510 and the terminal 20 will be described below.

The charging pad 510 may include a power source, an AC power generation unit 19, a controller 17, a transmission coil 14, a first magnet 12, and a Hall sensor 16.

Each of the power transmission units (1, 1) to (n, n) may include a power source, an AC power generation unit 19, and a transmission coil 14.

The power source generates AC power or DC power. The power source may convert AC power into first DC power and convert the first DC power into second DC power.

The AC power generation unit 19 may convert the power of the power source into AC power under control of the controller 17. The AC power obtained through conversion in the AC power generation unit 19 may be transmitted to the terminal 20 via the transmission coil 14.

The controller 17 may control the AC power generation unit 19 based on variation of the magnetic flux densities B1 and B2 detected by the Hall sensor 16.

The method according to an embodiment of the present disclosure may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It will be apparent to those skilled in the art that the present disclosure may be embodied in specific forms other than those set forth herein without departing from the essential characteristics of the present disclosure. The scope of the invention is solely defined by the appended claims.

Therefore, the above embodiments should be construed in all aspects as illustrative and not restrictive. The scope of the invention is solely defined by the appended claims.

[Industrial Applicability]

The present disclosure relates to a wireless charging technique, and may be applied to an apparatus and system for controlling wireless power transmission.

**Claims**

1.  A method for controlling a wireless power transmission device (200) equipped with a charging pad (510), the method comprising:

    recognizing a wireless power reception device (300) through a plurality of power transmission units ((1, 1)-(6, 6)) included in the charging pad (510);
    specifying a power transmission group including at least one power transmission unit ((1, 1)-(6, 6)) to transmit power to the wireless power reception device (300);
    controlling a phase of the specified power transmission group with respect to the wireless power reception device (300) based on a first power transmission unit (3, 3), which is selected because of having superior coil alignment with the wireless power reception device (300) among the power transmission units ((1, 1)-(6, 6)) included in the specified power transmission group, superior alignment meaning having the highest magnetic coupling with the wireless power reception device;

        receiving state information from the wireless power reception device (300);
        allocating power to be transmitted through the specified power transmission group based on the state information and an available amount of power of the wireless power transmission device (200); and
providing the allocated power to the wireless power reception device (300) through the specified power transmission group.

wherein the wireless power reception device (300) is recognized through change in a magnetic field in a Hall sensor included in each of the plurality of power transmission units ((1, 1)-(6, 6)),
wherein the specifying of the power transmission group comprises:

scanning a shape of the wireless power reception device based on intensities of the magnetic fields between the plurality of power transmission units and the wireless power reception device; and
specifying the power transmission group based on the scanned shape of the wireless power reception device.

2.  The method according to claim 1, wherein the recognizing of the wireless power reception device (300) comprises:
scanning the charging pad (510) from a rim of the charging pad (510) to a center of the charging pad (510) and recognizing the wireless power reception device (300).

3.  The method according to claim 1, wherein the specifying of the power transmission group comprises:
when a value of change in the magnetic field of each of the at least one power transmission unit ((1, 1)-(6, 6)) caused by the wireless power reception device (300) exceeds a predetermined threshold value, specifying the at least one power transmission unit exceeding the threshold value as the power transmission group.

4.  The method according to claim 1, wherein the controlling of the phase comprises:
controlling the phases of the magnetic fields between the power transmission units ((1, 1)-(6, 6)) included in the specified power transmission group and the wireless power reception device (300) to be the same based on the first power transmission unit (3,3).

5.  The method according to claim 1, wherein power is distributed to the at least one power transmission unit ((1, 1)-(6, 6)) included in the specified power transmission group based on efficiency power transmission from each of the at least one power transmission unit ((1, 1)-(6, 6)) to the wireless power reception device (300),
wherein the power is distributed to the at least one power transmission unit ((1, 1)-(6, 6)) in a descending order of the efficiency of power transmission to the wireless power reception device (300).

6.  The method according to claim 1, wherein the allocating of the power of the specified power transmission group comprises:
adjusting the power of an entirety of the power transmission unit ((1, 1)-(6, 6)) included in the specified power transmission group at one time based on a required power of the wireless power reception device (300).

7.  The method according to claim 1, wherein, when power transmittable through the first power transmission unit (3, 3) is sufficient to charge the recognized wireless power reception device (300), the wireless power reception device (300) is charged using only the first power transmission unit (3, 3).

8.  A wireless power transmission device (200) comprising:

a charging pad (510);
a plurality of power transmission units ((1, 1)-(6, 6)) configured to recognize a wireless power reception device (300) disposed in the charging pad (510); and
a controller (17) configured to

- specify a power transmission group including at least one power transmission unit ((1, 1)-(6, 6)) to transmit power to the wireless power reception device (300);
- select a first power transmission unit (3, 3) having superior coil alignment with the wireless power reception device (300) among the power transmission units ((1, 1)-(6, 6)) included in the specified power transmission group, superior alignment meaning having the highest magnetic coupling with the wireless power reception device; and
- control a phase of the specified power transmission group with respect to the reception device (300) based on the first power transmission unit (3, 3),

wherein the controller (17) is configured to perform a control operation to:

receive state information from the wireless power reception device (300);
allocate power to be transmitted through the specified power transmission group based on the state information and an available amount of power of the wireless power transmission device (200); and
provide the allocated power to the wireless power reception device (300) through the specified power transmission group wherein the controller (17) is configured to control the plurality of power transmission units ((1, 1)-(6, 6)) to recognize the wireless power reception device (300) through change in a magnetic field in a Hall sensor included in each of the plurality of power transmission units ((1, 1)-(6, 6)), and wherein the controller is configured to perform a control operation to scan a shape of the wireless power reception device based on intensities of the magnetic fields between the plurality of power transmission units and the wireless power reception device and to specify the power transmission group based on the scanned shape of the wireless power reception device.

9. The wireless power transmission device (200) according to claim 8, wherein the controller (17) is configured to control each of the plurality of power transmission units ((1, 1)-(6, 6)) to recognize the wireless power reception device (300) by scanning the charging pad (510) from a rim of the charging pad (510) to a center of the charging pad (510).

10. The wireless power transmission device (200) according to claim 8, wherein, when a value of change in the magnetic field of each of the at least one power transmission unit ((1, 1)-(6, 6)) caused by the wireless power reception device (300) exceeds a predetermined threshold value, the controller (17) is configured to specify the at least one power transmission unit ((1, 1)-(6, 6)) exceeding the threshold value as the power transmission group.

11. The wireless power transmission device (200) according to claim 8, wherein the controller (17) is configured to control the phases of the magnetic fields between the power transmission units ((1, 1)-(6, 6)) included in the specified power transmission group and the wireless power reception device (300) to be the same based on the first power transmission unit (3, 3).

**Patentansprüche**

1. Verfahren zum Steuern einer Drahtlosleistungssendungsvorrichtung (200), die mit einem Ladepad (510) ausgestattet ist, das Verfahren umfassend:

   Erkennen einer Drahtlosleistungsempfangsvorrichtung (300) durch eine Vielzahl von in dem Ladepad (510) eingeschlossenen Leistungssendeeinheiten ((1, 1)-(6, 6));
   Spezifizieren einer Leistungssendungsgruppe, die mindestens eine Leistungssendungseinheit ((1, 1)-(6, 6)) einschließt, um Leistung an die Drahtlosleistungsempfangsvorrichtung (300) zu übertragen;
   Steuern einer Phase der spezifizierten Leistungssendungsgruppe in Bezug auf die Drahtlosleistungsempfangsvorrichtung (300) basierend auf einer ersten Leistungssendungseinheit (3, 3), die aufgrund einer überlegenen Spulenausrichtung mit der Drahtlosleistungsempfangsvorrichtung (300) unter den in der spezifizierten Leistungssendungsgruppe eingeschlossenen Leistungssendungseinheiten ((1, 1)-(6, 6)) ausgewählt wird, wobei überlegene Ausrichtung bedeutet, die höchste magnetische Kopplung mit der Drahtlosleistungsempfangsvorrichtung aufzuweisen;
   Empfangen von Zustandsinformationen von der Drahtlosleistungsempfangsvorrichtung (300);
   Zuweisen von Leistung, die über die spezifizierte Leistungssendungsgruppe übertragen werden soll, basierend auf den Zustandsinformationen und einer verfügbaren Leistungsmenge der Drahtlosleistungssendungsvorrichtung (200); und
   Bereitstellen der zugewiesenen Leistung an die Drahtlosleistungsempfangsvorrichtung (300) durch die spezifizierte Leistungssendungsgruppe,
   wobei die Drahtlosleistungsempfangsvorrichtung (300) durch eine Änderung eines Magnetfelds in einem Hall-Sensor erkannt wird, der in jeder der Vielzahl von Leistungssendungseinheiten ((1, 1)-(6, 6)) eingeschlossen ist,
   wobei das Spezifizieren der Leistungssendungsgruppe umfasst:

      Abtasten einer Form der Drahtlosleistungsempfangsvorrichtung basierend auf Intensitäten der Magnetfelder zwischen der Vielzahl von Leistungssendungseinheiten und der Drahtlosleistungsempfangsvorrichtung; und
      Spezifizieren der Leistungssendungsgruppe basierend auf der abgetasteten Form der Drahtlosleistungsempfangsvorrichtung.

2. Verfahren nach Anspruch 1, wobei das Erkennen der Drahtlosleistungsempfangsvorrichtung (300) umfasst:
   Abtasten des Ladepads (510) von einem Rand des Ladepads (510) zu einer Mitte des Ladepads (510) und Erkennen der Drahtlosleistungsempfangsvorrichtung (300).

3. Verfahren nach Anspruch 1, wobei das Spezifizieren der Leistungssendungsgruppe umfasst:
   wenn ein Wert der durch die Drahtlosleistungsempfangsvorrichtung (300) verursachten Änderung im Magnetfeld jeder der mindestens einen Leistungssendungseinheit ((1, 1)-(6, 6)) einen vorbestimmten Grenzwert überschreitet, Spezifizieren der mindestens einen Leistungssendungseinheit, die den Grenzwert überschreitet, als die Leistungssendungsgruppe.

4. Verfahren nach Anspruch 1, wobei das Steuern der Phase umfasst:
Steuern der Phasen der Magnetfelder zwischen den in der spezifizierten Leistungssendungsgruppe eingeschlossenen Leistungssendungseinheiten ((1, 1)-(6, 6)) und der Drahtlosleistungsempfangsvorrichtung (300), so dass sie basierend auf der ersten Leistungssendungseinheit (3,3) gleich sind.

5. Verfahren nach Anspruch 1, wobei Leistung an die mindestens eine Leistungssendungseinheit ((1, 1)-(6, 6)), die in der spezifizierten Leistungssendungsgruppe eingeschlossen ist, basierend auf der Effizienz der Leistungssendung von jeder der mindestens einen Leistungssendungseinheit ((1, 1)-(6, 6)) an die Drahtlosleistungsempfangsvorrichtung (300) verteilt wird,
wobei die Leistung auf die mindestens eine Leistungssendungseinheit ((1, 1)-(6, 6)) in absteigender Reihenfolge der Effizienz der Leistungssendung an die Drahtlosleistungsempfangsvorrichtung (300) verteilt wird.

6. Verfahren nach Anspruch 1, wobei das Zuweisen der Leistung der spezifizierten Leistungssendungsgruppe umfasst:
gleichzeitiges Anpassen der Leistung einer Gesamtheit der in der spezifizierten Leistungssendungsgruppe eingeschlossenen Leistungssendungseinheit ((1, 1)-(6, 6)) basierend auf einer erforderlichen Leistung der Drahtlosleistungsempfangsvorrichtung (300).

7. Verfahren nach Anspruch 1, wobei, wenn Leistung, die durch die erste Leistungssendungseinheit (3, 3) übertragbar ist, ausreicht, um die erkannte Drahtlosleistungsempfangsvorrichtung (300) zu laden, die Drahtlosleistungsempfangsvorrichtung (300) nur unter Verwendung der ersten Leistungssendungseinheit (3, 3) geladen wird.

8. Drahtlosleistungssendungsvorrichtung (200), umfassend:

ein Ladepad (510);
eine Vielzahl von Leistungssendungseinheiten ((1, 1)-(6, 6)), die konfiguriert sind, um eine in dem Ladepad (510) angeordnete Drahtlosleistungsempfangsvorrichtung (300) zu erkennen; und

eine Steuerung (17), die konfiguriert ist zum

- Spezifizieren einer Leistungssendungsgruppe, die mindestens eine Leistungssendungseinheit ((1, 1)-(6, 6)) einschließt, um Leistung an die Drahtlosleistungsempfangsvorrichtung (300) zu übertragen;
- Auswählen einer ersten Leistungssendungseinheit (3, 3), die eine überlegene Spulenausrichtung mit der Drahtlosleistungsempfangsvorrichtung (300) unter den in der spezifizierten Leistungssendungsgruppe eingeschlossenen Leistungssendungseinheiten ((1, 1)-(6, 6)) aufweist, wobei überlegene Ausrichtung bedeutet, die höchste magnetische Kopplung mit der Drahtlosleistungsempfangsvorrichtung aufzuweisen; und
- Steuern einer Phase der spezifizierten Leistungssendungsgruppe in Bezug auf die Empfangsvorrichtung (300) basierend auf der ersten Leistungssendungseinheit (3, 3),

wobei die Steuerung (17) konfiguriert ist, um einen Steuervorgang durchzuführen zum:

Empfangen von Zustandsinformationen von der Drahtlosleistungsempfangsvorrichtung (300);
Zuweisen von Leistung, die über die spezifizierte Leistungssendungsgruppe übertragen werden soll, basierend auf den Zustandsinformationen und einer verfügbaren Leistungsmenge der Drahtlosleistungssendungsvorrichtung (200); und
Bereitstellen der zugewiesenen Leistung an die Drahtlosleistungsempfangsvorrichtung (300) durch die spezifizierte Leistungssendungsgruppe,
wobei die Steuerung (17) konfiguriert ist, um die Vielzahl von Leistungssendungseinheiten ((1, 1)-(6, 6)) zu steuern, um die Drahtlosleistungsempfangsvorrichtung (300) durch eine Änderung eines Magnetfelds in einem Hall-Sensor zu erkennen, der in jeder der Vielzahl von Leistungssendungseinheiten ((1, 1)-(6, 6)) eingeschlossen ist, und
wobei die Steuerung konfiguriert ist, um einen Steuervorgang durchzuführen, um eine Form der Drahtlosleistungsempfangsvorrichtung basierend auf Intensitäten der Magnetfelder zwischen der Vielzahl von Leistungssendungseinheiten und der Drahtlosleistungsempfangsvorrichtung abzutasten und die Leistungssendungsgruppe basierend auf der abgetasteten Form der Drahtlosleistungsempfangsvorrichtung zu spezifizieren.

9. Drahtlosleistungssendungsvorrichtung (200) nach Anspruch 8, wobei die Steuerung (17) konfiguriert ist, um jede der Vielzahl von Leistungssendungseinheiten ((1, 1)-(6, 6)) zu steuern, um die Drahtlosleistungsempfangsvorrichtung (300) durch Abtasten des Ladepads (510) von einem Rand des Ladepads (510) zu einer Mitte des Ladepads (510) zu erkennen.

10. Drahtlosleistungssendungsvorrichtung (200) nach Anspruch 8, wobei, wenn ein Wert der durch die Drahtlosleistungsempfangsvorrichtung (300) verursachten Änderung im Magnetfeld jeder der mindestens einen Leistungssendungseinheit ((1, 1)-(6, 6)) einen vorbestimmten Grenzwert überschreitet, die Steuerung (17) konfiguriert ist, um die mindestens eine Leistungssendungseinheit ((1, 1)-(6, 6)), die den Grenzwert überschreitet, als die Leistungssendungsgruppe zu spezifizieren.

11. Drahtlosleistungssendungsvorrichtung (200) nach Anspruch 8, wobei die Steuerung (17) konfiguriert ist, um die Phasen der Magnetfelder zwischen den in der spezifizierten Leistungssendungsgruppe eingeschlossenen Leistungssendungseinheiten ((1, 1)-(6, 6)) und der Drahtlosleistungsempfangsvorrichtung (300) so zu steuern, dass sie basierend auf der ersten Leistungssendungseinheit (3, 3) gleich sind.

**Revendications**

1. Une méthode de contrôle d'un dispositif de transmission d'énergie sans fil (200) équipé d'un tapis de charge (510), la méthode comprenant :

   l'identification d'un dispositif de réception d'énergie sans fil (300) au moyen d'une pluralité d'unités de transmission d'énergie ((1, 1)-(6, 6)) incluses dans le tapis de charge (510) ;
   la sélection d'un groupe de transmission d'énergie comprenant au moins une unité de transmission d'énergie ((1, 1)-(6, 6)) destinée à transmettre de l'énergie au dispositif de réception d'énergie sans fil (300) ;
   le contrôle d'une phase du groupe de transmission d'énergie spécifié par rapport au dispositif de réception d'énergie sans fil (300) en se basant sur une première unité de transmission d'énergie (3, 3), laquelle est sélectionnée parce qu'elle présente un meilleur alignement de la bobine avec le dispositif de réception d'énergie sans fil (300) parmi les unités de transmission d'énergie ((1, 1)-(6, 6)) incluses dans le groupe de transmission d'énergie spécifié, « meilleur alignement » signifiant qu'elle présente le couplage magnétique le plus élevé avec le dispositif de réception d'énergie sans fil ;
   la réception des informations d'état du dispositif de réception d'énergie sans fil (300) ;
   l'allocation de la puissance à transmettre via le groupe de transmission d'énergie spécifié en fonction des informations d'état et de la puissance disponible du dispositif de transmission d'énergie sans fil (200) ; et
   la fourniture de la puissance allouée au dispositif de réception d'énergie sans fil (300) via le groupe de transmission d'énergie spécifié.
   où le dispositif de réception d'énergie sans fil (300) est reconnu par une variation du champ magnétique au niveau du capteur Hall inclus dans chacune des unités de transmission d'énergie ((1, 1)-(6, 6)),
   où la définition du groupe de transmission d'énergie comprend :

   le balayage de la forme du dispositif de réception d'énergie sans fil en se basant sur les intensités des champs magnétiques entre la pluralité d'unités de transmission d'énergie et le dispositif de réception d'énergie sans fil ; et
   la spécification du groupe de transmission d'énergie en fonction de la forme scannée du dispositif de réception d'énergie sans fil.

2. La méthode selon la revendication 1, dans laquelle la reconnaissance du dispositif de réception d'énergie sans fil (300) comprend :
   le balayage du tapis de charge (510) depuis le bord du tapis de charge (510) jusqu'au centre du tapis de charge (510) et la reconnaissance du dispositif de réception d'énergie sans fil (300).

3. La méthode selon la revendication 1, dans laquelle la détermination du groupe de transmission d'énergie comprend :
   lorsque la variation du champ magnétique d'au moins une des unités de transmission d'énergie ((1, 1)-(6, 6)), causée par le dispositif de réception d'énergie sans fil (300), dépasse une valeur seuil prédéterminée, spécifier comme groupe de transmission d'énergie l'unité de transmission d'énergie (ou les unités) dépassant cette valeur seuil.

4. La méthode selon la revendication 1, dans laquelle le contrôle de la phase comprend :
   le contrôle des phases des champs magnétiques entre les unités de transmission d'énergie ((1, 1)-(6, 6)) incluses dans le groupe de transmission d'énergie spécifié et le dispositif de réception d'énergie sans fil (300) pour qu'elles soient identiques, en se basant sur la première unité de transmission d'énergie (3,3).

5. La méthode selon la revendication 1, dans laquelle la puissance est distribuée à l'au moins une unité de transmission d'énergie ((1, 1)-(6, 6)) incluse dans le groupe de transmission d'énergie spécifié en fonction de l'efficacité de transmission d'énergie de chacune des unités de transmission d'énergie ((1, 1)-(6, 6)) vers le dispositif de réception d'énergie sans fil (300),

où la puissance est distribuée à l'au moins une unité de transmission d'énergie ((1, 1)-(6, 6)) dans un ordre décroissant de l'efficacité de transmission d'énergie vers le dispositif de réception d'énergie sans fil (300).

6. La méthode selon la revendication 1, dans laquelle l'allocation de la puissance du groupe de transmission d'énergie spécifié comprend :

l'ajustement de la puissance de l'ensemble des unités de transmission d'énergie ((1, 1)-(6, 6)) inclus dans le groupe de transmission d'énergie spécifié simultanément, en fonction de la puissance requise du dispositif de réception d'énergie sans fil (300).

7. La méthode selon la revendication 1, dans laquelle, lorsque la puissance transmissible par la première unité de transmission d'énergie (3, 3) est suffisante pour charger le dispositif de réception d'énergie sans fil (300) reconnu, le dispositif de réception d'énergie sans fil (300) est chargé uniquement à l'aide de la première unité de transmission d'énergie (3, 3).

8. Un dispositif de transmission d'énergie sans fil (200) comprenant :

un tapis de charge (510) ;
une pluralité d'unités de transmission d'énergie ((1, 1)-(6, 6)) configurées pour reconnaître un dispositif de réception d'énergie sans fil (300) disposé sur le tapis de charge (510) ; et un contrôleur (17) configuré pour

- spécifier un groupe de transmission d'énergie comprenant au moins une unité de transmission d'énergie ((1, 1)-(6, 6)) pour transmettre de l'énergie au dispositif de réception d'énergie sans fil (300) ;
- sélectionner une première unité de transmission d'énergie (3, 3) présentant un meilleur alignement de la bobine avec le dispositif de réception d'énergie sans fil (300) parmi les unités de transmission d'énergie ((1, 1)-(6, 6)) incluses dans le groupe de transmission d'énergie spécifié, « meilleur alignement » signifiant qu'elle présente le couplage magnétique le plus élevé avec le dispositif de réception d'énergie sans fil ; et
- contrôler une phase du groupe de transmission d'énergie spécifié par rapport au dispositif de réception d'énergie sans fil (300) en se basant sur la première unité de transmission d'énergie (3, 3),

où le contrôleur (17) est configuré pour effectuer une opération de contrôle consistant à : recevoir des informations d'état du dispositif de réception d'énergie sans fil (300) ;
allouer la puissance à transmettre via le groupe de transmission d'énergie spécifié en fonction des informations d'état et de la puissance disponible du dispositif de transmission d'énergie sans fil (200) ; et
fournir la puissance allouée au dispositif de réception d'énergie sans fil (300) via le groupe de transmission d'énergie spécifié
dans lequel le contrôleur (17) est configuré pour contrôler la pluralité d'unités de transmission d'énergie ((1, 1)-(6, 6)) afin de reconnaître le dispositif de réception d'énergie sans fil (300) par une variation du champ magnétique dans un capteur Hall inclus dans chacune desdites unités de transmission d'énergie ((1, 1)-(6, 6)), et dans lequel le contrôleur est configuré pour effectuer une opération de contrôle visant à balayer la forme du dispositif de réception d'énergie sans fil en se basant sur les intensités des champs magnétiques entre la pluralité d'unités de transmission d'énergie et le dispositif de réception d'énergie sans fil, et à spécifier le groupe de transmission d'énergie en se basant sur la forme scannée du dispositif de réception d'énergie sans fil.

9. Le dispositif de transmission d'énergie sans fil (200) selon la revendication 8, dans lequel le contrôleur (17) est configuré pour contrôler chacune des unités de transmission d'énergie ((1, 1)-(6, 6)) afin de reconnaître le dispositif de réception d'énergie sans fil (300) en balayant le tapis de charge (510) depuis le bord du tapis de charge (510) vers le centre du tapis de charge (510).

10. Le dispositif de transmission d'énergie sans fil (200) selon la revendication 8, dans lequel, lorsque la variation du champ magnétique d'au moins une des unités de transmission d'énergie ((1, 1)-(6, 6)) causée par le dispositif de réception d'énergie sans fil (300) dépasse une valeur seuil prédéterminée, le contrôleur (17) est configuré pour désigner comme groupe de transmission d'énergie l'unité de transmission d'énergie (ou les unités) dépassant cette valeur seuil.

11. Le dispositif de transmission d'énergie sans fil (200) selon la revendication 8, dans lequel le contrôleur (17) est configuré pour contrôler les phases des champs magnétiques entre les unités de transmission d'énergie ((1, 1)-(6, 6)) incluses dans le groupe de transmission d'énergie spécifié et le dispositif de réception d'énergie sans fil (300) de manière à les rendre identiques en se basant sur la première unité de transmission d'énergie (3, 3).

【FIG. 1】

【FIG. 2】

【FIG. 3】

【FIG. 4】

【FIG. 5】

【FIG. 6】

【FIG. 7】

【FIG. 8】

```
                    ┌─────────────┐
                    │    Start    │
                    └─────────────┘
                           │
                           ▼
┌──────────────────────────────────────────────┐
│ Recognize wireless power reception device     │        S810
│ through a plurality of power transmission     │
│ units included in charging pad                │
└──────────────────────────────────────────────┘
                           │
                           ▼
┌──────────────────────────────────────────────┐
│ Specify at least one power transmission group │        S820
│ to transmit power to the wireless power       │
│ reception device                              │
└──────────────────────────────────────────────┘
                           │
                           ▼
┌──────────────────────────────────────────────┐
│ Control phase of the specified power          │        S830
│ transmission group                            │
└──────────────────────────────────────────────┘
                           │
                           ▼
┌──────────────────────────────────────────────┐
│ Adjust the power of the power transmission    │        S840
│ group to transmit power to the wireless       │
│ power reception device                        │
└──────────────────────────────────────────────┘
                           │
                           ▼
                    ┌─────────────┐
                    │     End     │
                    └─────────────┘
```

【FIG. 9】

【FIG. 10】

【FIG. 11】

(2,2) (2,3) (2,4)
(3,2) (3,3) (3,4)
(4,2) (4,4)
(4,3)

【FIG. 12】

(2,2) (2,3) (2,4)
(3,2) (3,3) (3,4)
(4,2) (4,4)
(4,3)

【FIG. 13】

【FIG. 14】

【FIG. 15】

【FIG. 16】

**EP 3 282 545 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015054347 A1
- US 2010259217 A1
- US 2006202665 A1
- EP 2256895 A1
- US 2014312702 A1
- US 2009224723 A1